# EUROPEAN PATENT SPECIFICATION

(11) **EP 2 660 079 B1**
(45) Date of publication and mention of the grant of the patent: **03.08.2016**
(21) Application number: 11853086.4
(22) Date of filing: 26.12.2011
(51) Int. Cl.: B60C 11/04, B60C 11/13

(54) **TIRE**
REIFEN
PNEU

(30) Priority: 28.12.2010 JP 2010293377; 28.12.2010 JP 2010293382
(43) Date of publication of application: 06.11.2013
(73) Proprietor: Bridgestone Corporation, Tokyo 104-8340 (JP)
(72) Inventor: OOGANE, Shun, Tokyo 187-8531 (JP)
(74) Representative: Lamb, Martin John Carstairs
(86) International application number: PCT/JP2011/080030
(87) International publication number: WO 2012/090917

(56) References cited:
- EP-A2- 1 216 853
- EP-A2- 1 541 383
- WO-A1-2008/096879
- DE-A1-102006 031 779
- JP-A- 2004 224 268
- JP-A- 2008 302 740
- JP-A- 2009 160 994

## Description

### Technical Field

The present invention relates to a tire that suppresses a temperature increase of a tire due to running.

### Background Art

Conventionally, in a pneumatic tire (hereinafter, a tire) mounted on a vehicle, various methods have been used to suppress a temperature increase of a tire due to vehicle running. Particularly, a temperature increase is remarkable in a heavy-duty tire for a truck, bus, construction vehicle and the like.

Thus, for example, a tire having a number of fin-shaped protrusions in a sidewall portion (see PTL 1, for example) has been known. In such a tire, when a tire rolls on a road surface, a fin-shaped protrusions causes turbulence in an airflow passing through a sidewall surface, the turbulence accelerates heat radiation from a tire, and a temperature increase of a sidewall portion is suppressed. EP1541383 discloses a tire with particular under flow characteristics.

### Citation List

### Patent Literature

PTL1: Japanese Patent Application Publication 2009-160994 (Pages 4 to 5, Fig. 2)

### Summary of the Invention

However, the conventional tire described above has a point to be improved. That is, there are limitations to effective suppression of a temperature increase in a tread portion only by a protrusion in a sidewall portion.

The present invention has been made in view of such a situation. Accordingly, it is an object of the invention to provide a tire that can effectively suppress a temperature increase of a tread portion due to vehicle running.

In a tread portion of a heavy-duty tire for a truck, bus, construction vehicle and the like, a rubber gauge (thickness) is large, and a rubber volume is large. If such a heavy-duty tire repeatedly deforms, a temperature of a tread portion increases. The inventor of the present application has found that a main heat source exists particularly in a tread portion outside a tire radial direction rather than in a belt layer near a tire equator line in such a heavy-duty tire.

Thus, the feature of the present invention is summarized as a tire (pneumatic tire 10) in which a groove portion (groove portion 30) extending in a tire circumferential direction is formed in a tread portion (tread portion 20), wherein: in a groove bottom (groove bottom 32) of the groove portion, a plurality of protrusion portions (protrusion portions 100) are provided, the protrusion portions extend from one sidewall (sidewall 31) forming the groove portion toward the other sidewall (sidewall 32) facing the one sidewall, the protrusion portions are provided at predetermined interval in the groove portion, and when the length of the protrusion portions along the groove center line is L and the predetermined interval is P, in a tread surface view of the tire, the relation of 1.25<P ≦ 10L is satisfied.

### Brief Description of the Drawings

[Fig. 1] Fig. 1 is a schematic perspective view of a pneumatic tire 10 according to the embodiment of the present invention.
[Fig. 2] Fig. 2 is a sectional view of the pneumatic tire 10 along the tread width direction and tire radial direction according to the embodiment of the present invention.
[Fig. 3] Fig. 3 is a partially broken perspective view of the groove portion 30 according to the embodiment of the present invention.
[Fig. 4] Fig. 4 shows the shape of the groove portion 30 in the tread surface view (the viewpoint above the tread portion 20) of the groove portion 30 according to the embodiment of the present invention.
[Fig. 5] Fig. 5 is a view showing the shape of the groove portion 30 from the direction of F5 in Fig. 4.
[Fig. 6] Fig. 6 is a sectional view of the groove portion 30 (the protrusion portions 100) along the line F6-F6 in Fig. 4.
[Fig. 7] Fig. 7 is a graph showing the relationship between the angle *θ* and the heat transfer rate (index) in the groove portion 30.
[Fig. 8] Fig. 8 is a graph showing the relationship between the coefficient applied to the length L of the protrusion portions 100 and the heat transfer rate in the groove portion 30.
[Fig. 9] Fig. 9 is a graph showing the relationship between the coefficient applied to the groove depth D of the protrusion portions 100 and the heat transfer rate in the groove portion 30.
[Fig. 10] Fig. 10 is a view showing the cross-sectional shape of the protrusion portions 100 according to modifications of the present invention.

### Description of Embodiments

Hereinafter, embodiments of the present invention will be described with reference to the drawings. In the following description of the drawings, the same or similar constituent elements are designated by the same or similar reference numerals. It is to be noted that the drawings are schematic and the dimensions or ratios are different from real values.

Therefore, actual dimensions should be determined according to the following explanations. The drawings include parts of different dimensions or ratios.

### (1) Schematic configuration of a tire

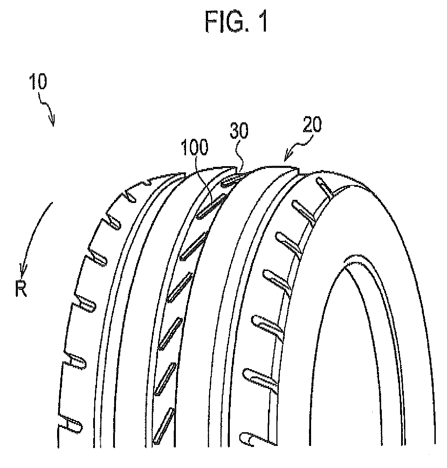

Fig. 1 is a schematic perspective view of a pneumatic tire 10 according to the present embodiment. The pneumatic tire 10 is a pneumatic radial tire mounted on a truck or bus (TBR) or a construction vehicle (ORR) such as a dump truck. The pneumatic tire 10 may be filled with inactive gas such as nitrogen gas.

The pneumatic tire 10 has a tread portion 20 that may contact with a road surface. The tread portion 20 has a groove portion 30 formed therein. The groove portion 30 is a linear groove extending in a tire circumference direction.

A plurality of protrusion portions 100 are provided inside the groove portion 30.

Here, for convenience of description, the pneumatic tire 10 is mounted on a vehicle to rotate in the rotational direction R when the vehicle moves forward. The rotational direction when the pneumatic tire 10 is mounted is not specified.

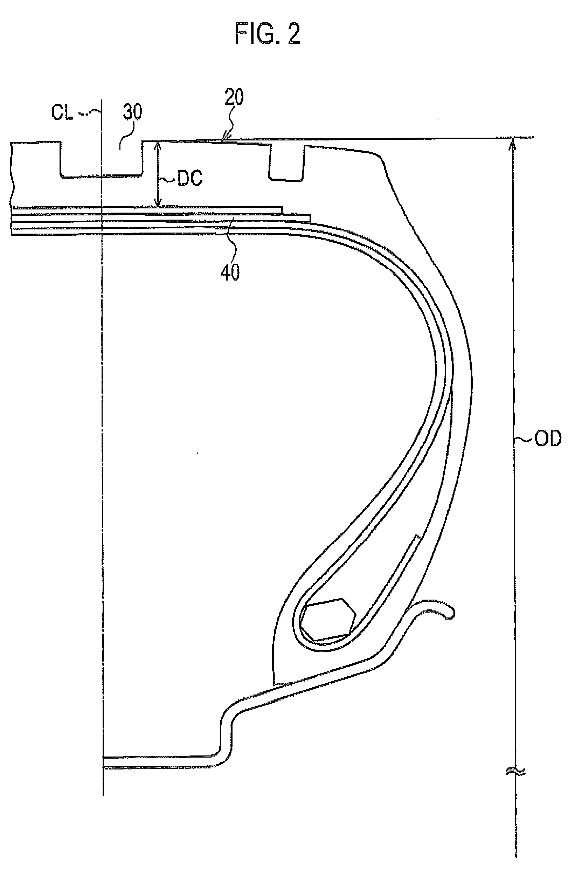

Fig. 2 is a sectional view of the pneumatic tire 10 along the tread width direction and tire radial direction. As shown in Fig. 2, the pneumatic tire 10 has a belt layer 40 comprised of a plurality of belts. In comparison with a pneumatic tire for a passenger car, a rubber gauge (thickness) of the tread portion 20 of the pneumatic tire 10 is larger.

In particular, assuming the tire outer diameter to be OD and the rubber gauge of the tread portion 20 at the position of the tire equator line to be CL, the pneumatic tire 10 satisfies DC/OD≧0.015.

The tire outer diameter OD (unit: mm) means the diameter of the pneumatic tire 10 in the part that the outer diameter of the pneumatic tire 10 becomes to be maximum (generally, the tread portion 20 near the tire equator line CL). The rubber gauge DC (unit: mm) means the rubber thickness of the tread portion 20 at the position of the tire equator line CL. The rubber gauge DC does not include the thickness of the belt layer 40. As shown in Fig. 2, when the groove portion 30 has been formed at the position including the tire equator line CL, the rubber gauge means the rubber thickness of the tread portion 20 at the position adjacent to the groove portion 30.

### (2) Shape of the groove portion 30

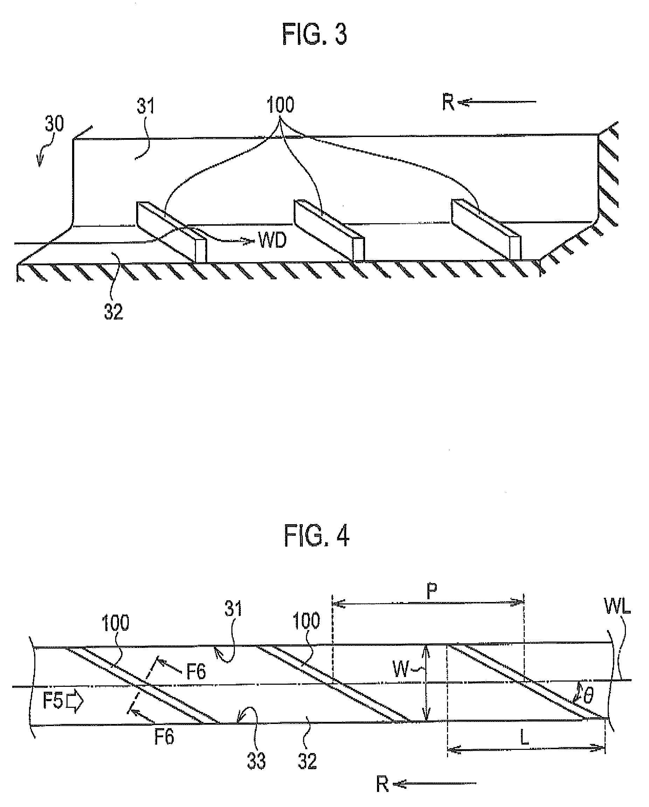

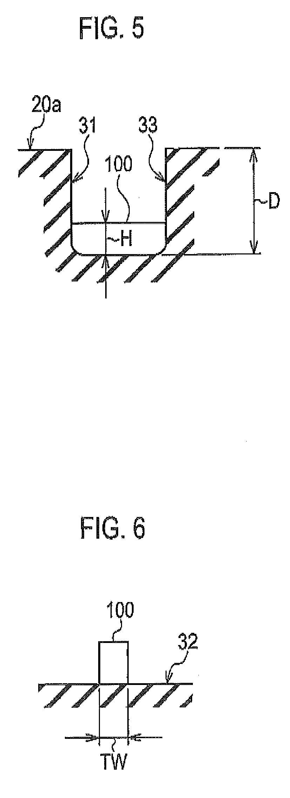

Fig. 3 is a partially broken perspective view of the groove portion 30. Fig. 4 shows the shape of the groove portion 30 in the tread surface view (the viewpoint above the tread portion 20) of the groove portion 30. Fig. 5 shows the shape of the groove portion 30 from the direction of F5 in Fig. 4. Fig. 6 is a sectional view of the groove portion 30 (the protrusion portions 100) along the line F6-F6 in Fig. 4.

As shown in Figs. 3 to 6, the groove bottom 32 of the groove portion 30 is provided with a plurality of protrusion portions 100.

In the present embodiment, the protrusion portions 100 are provided at predetermined interval P in the groove portion 30. The protrusion portions 100 are extending from one sidewall 31 forming the protrusion portions 100 toward the other sidewall 33. In the present embodiment, the protrusion portions 100 are extending from one sidewall 31 to the other sidewall 33. In other words, the protrusion portions 100 are provided over the whole groove width W of the groove portion 30. In the present embodiment, the sidewall 31 and sidewall 33 extend to be substantially parallel to the tire circumferential direction, and are formed so as to be opposed each other.

The protrusion portions 100 are provided so as to be erected outside in the tire radial direction from the groove bottom 32 of the groove portion 30. In the present embodiment, the protrusion portions 100 are a flat-shaped rubber rising from the groove bottom 32, and are provided so as to be inclined with respect to the tire circumferential direction.

In particular, as shown in Fig. 4, the angle *θ* formed between the groove center line WL and the protrusion portions 100 are 10 to 60 degrees. The angle *θ* is, in the tread surface view of the pneumatic tire 10, the angle formed between the arranged direction of the protrusion portions 100 and the groove center line WL passing through the center in the width direction of the groove portion 30, and is the angle formed on the side opposite to the rotation direction of the pneumatic tire 10. In other words, the angle *θ* is the angle that is formed in the advancing direction of a running wind WD generated when the pneumatic tire 10 rolls in the rotational direction R.

Further, in the tread surface view of the pneumatic tire 10, assuming the length of the protrusion portions 100 along the groove center line WL to be L and the predetermined interval to be P, the protrusion portions 100 provided in the groove portion 30 satisfies the relation of 1.25<P≦10L.

The length L is the length from one end to the other end of the protrusion portions 100 in the extending direction (in the tire circumferential direction In the present embodiment) of the groove portion 30. The interval P is the distance between the centers of the protrusion portions 100 where the protrusion portions 100 and the groove centerline WL intersect.

Assuming the distance from the sidewall 31 to the sidewall 33 of the groove portion 30 to be the groove width W, the length L can also be expressed as W/tan *θ* +TW/sin *θ*. Here, the protrusion width TW is, as shown in Fig. 6, the width of the protrusion portions 100 in the crosswise direction of the protrusion portions 100, namely, in the direction perpendicular to the extending direction of the protrusion portions 100.

Further, as shown in Fig. 5, assuming the height from the groove bottom 32 of the protrusion portions 100 to be H and the depth from the tread surface 20a of the groove portion 30 to the groove bottom 32 (the deepest portion) to be D, the protrusion portions 100 satisfy the relation of 0.03D<H≦0.4D. Further, assuming the groove width of the groove portion 30 to be W, the groove bottom 32 is flat at least in the width of 0.2W In other words, in the central portion of the groove bottom 32 in the groove width W including the groove centerline WL, the surface of the groove bottom 32 is smooth without any convex or concave portions.

### (3) Operations and Effect

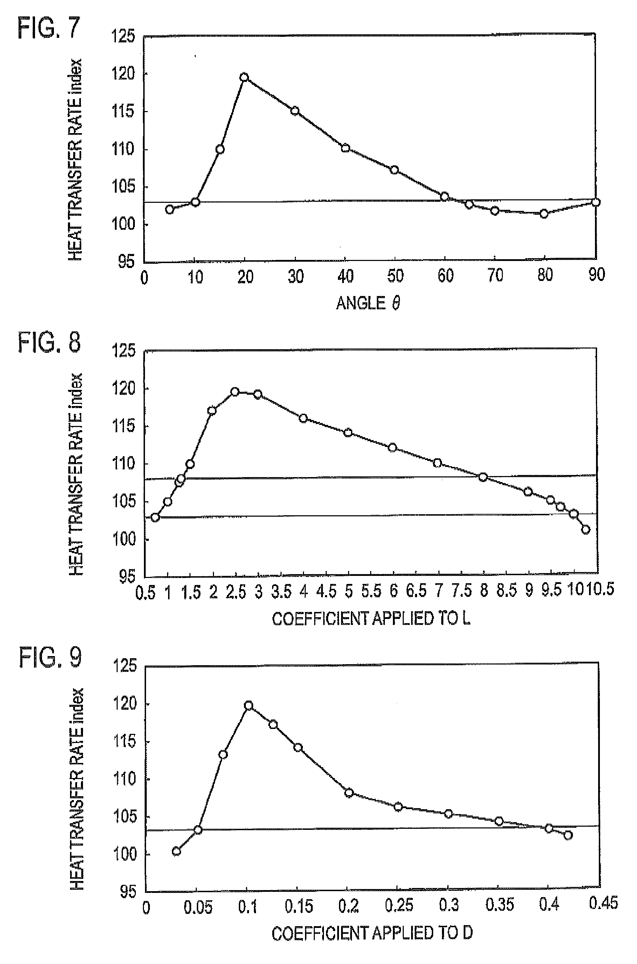

Next, the operations and effects of the pneumatic tire 10 described above will be explained with reference to Fig. 7 to Fig. 9 and Table 1. Fig. 7 shows the relationship between the angle *θ* and the heat transfer rate (index) in the groove portion 30. Fig. 8 shows the relationship between the coefficient applied to the length L of the protrusion portions 100 and the heat transfer rate in the groove portion 30. Fig. 9 shows the relationship between the coefficient applied to the groove depth D of the protrusion portions 100 and the heat transfer rate in the groove portion 30. Table 1 shows the relationship between the coefficient applied to the length L of the protrusion portions 100 and the heat transfer rate in the groove portion 30.

As shown in Fig. 7, the angle *θ* is preferably set to 10 degrees to 60 degrees. If the angle *θ* is smaller than 10 degrees, the flow of the running wind WD becomes very weak due to an acute angle portion formed by the protrusion portions 100 and the sidewall 31 (or the sidewall 33), and effective heat radiation from the tread portion 20 is not expected. Further, such a protrusion portions 100 are difficult to make. On the other hand, if the angle *θ* exceeds 60 degrees, the effect of changing the running wind WD to a spiral flow is decreased. Thus, the air volume passing through the groove bottom 32 decreases, and effective heat radiation from the tread portion 20 is not expected.

**[Table 1] Examples marked with a "*" are included by way of reference.**

| | COEFFICIENT APPLIED TO L | HEAT TRANSFER RATE index |
|---|---|---|
| * EXAMPLE 1 | 0.75 | 103 |
| * EXAMPLE 2 | 1.00 | 105 |
| * EXAMPLE 3 | 1.25 | 107.5 |
| EXAMPLE 4 | 1.26 | 108 |
| EXAMPLE 5 | 1.5 | 110 |
| EXAMPLE 6 | 2.0 | 117 |
| EXAMPLE 7 | 2.5 | 119.5 |
| EXAMPLE 8 | 3 | 119 |
| EXAMPLE 9 | 4 | 116 |
| EXAMPLE 10 | 5 | 114 |
| EXAMPLE 11 | 6 | 112 |
| EXAMPLE 12 | 7 | 110 |
| EXAMPLE 13 | 8 | 108 |
| EXAMPLE 14 | 9 | 106 |
| EXAMPLE 15 | 9.5 | 105 |
| EXAMPLE 16 | 9.75 | 104 |
| EXAMPLE 17 | 10 | 103 |
| EXAMPLE 18 | 10.25 | 101 |

As shown in Fig. 8 and Table 1, the coefficient applied to the length L is set to 0.75 to 10.00. If the coefficient is smaller than 1.25, the number of protrusion portions 100 provided in the groove portion 30 is too large. Thus, the speed of the running wind WD remarkably decreases, and effective heat radiation from the tread portion 20 is not expected. On the other hand, if the coefficient exceeds 10.00, the effect of changing the running wind ED to a spiral flow is decreased. Thus, the air volume passing through the groove bottom 32 decreases, and effective heat radiation from the tread portion 20 is not expected.

Further, if the length L is small, it is difficult to ensure the space of the groove bottom 32 through which the running wind WD passes. Thus, in the setting of the coefficient to be applied to the length L, a lower limit value is more important than an upper limit value. The coefficient to be applied to the length L is larger than 1.25. The coefficient to be applied to the length L is preferably 1.5 or larger, and more preferably, 2.0 or larger.

As shown in Fig. 9, the coefficient to be applied to the groove depth D is preferably larger than 0.03, and 0.40 or smaller. If the coefficient is 0.03 or smaller, the height of the protrusion portions 100 in the groove portion 30 is too small. Thus, the effect of changing the running wind WD to a spiral flow is decreased, and effective heat radiation from the tread portion 20 is not expected. On the other hand, if the coefficient exceeds 0.400, the running wind WD can be changed to a spiral flow, but the running wind WD hardly reaches the groove bottom 32, and effective heat radiation from the tread portion 20 is not expected.

As described above, according to the pneumatic tire 10, a plurality of protrusion portions 100 are provided in the groove bottom 32 of the groove portion, and the protrusion portions 100 are continuous from one widewall 31 forming the groove portion 30 to the other sidewall 33.

In particular, In the present embodiment, the protrusion portions 100 are obliquely provided so as to have the angle *θ* with respect to the groove center line WL. When the running wind WD passes beyond such a protrusion portions 100, the running wind WD changes to a spiral (swirl-like) flow, and the passing speed of the running wind ED increases. Thus, the air volume of the running wind WD passing through the groove bottom 32 increases, and heat radiation from the tread portion 20 is accelerated. In other words, according to the pneumatic tire 10, a temperature increase of the tread portion 20 due to vehicle running can be effectively suppressed.

Further, as shown in Fig. 7 to Fig. 9, by setting the angle *θ*, the coefficient to be applied to the length L, and the coefficient to be applied to the groove depth D, to appropriate ranges, a temperature increase of the tread portion 20 can be more effectively suppressed.

Further, in the present embodiment, as the groove bottom 32 is flat at least in the width of 0.2W, the flow of the running wind WD passing through the groove bottom 32 is not disturbed, and a temperature increase of the tread portion 20 can be more effectively supressed.

### (4) Other Embodiments

As mentioned above, the present invention has been described through the embodiment of the present invention. However, it must not be understood that the discussions and the drawings constituting a part of this disclosure limit the present invention. From this disclosure, various alternative embodiments, examples and operational techniques are apparent to those skilled in the art.

For example, in the present embodiment described above, the groove portion 30 extends to be parallel to the tire circumferential direction, but the groove portion 30 may not extend to be parallel to the tire circumferential direction. For example, when the angle formed with the tire equator line CL is 45 degrees or smaller, the groove portion 30 may not be parallel to the tire circumferential direction. Further, the groove portion 30 may not be linear, and for example, may be curved toward outside in the tread width direction, or may be zigzagged. When the groove portion 30 is zigzagged, it is preferably shaped not to decrease the speed of the running wind WD.

Further, the shape of the protrusion portions 100 may not be flat, and for example, may be wave-shaped in the tread surface view, or may be shaped thicker in the portion near the groove center line WL and thinner toward the sidewall 31 and sidewall 33 (or vice versa).

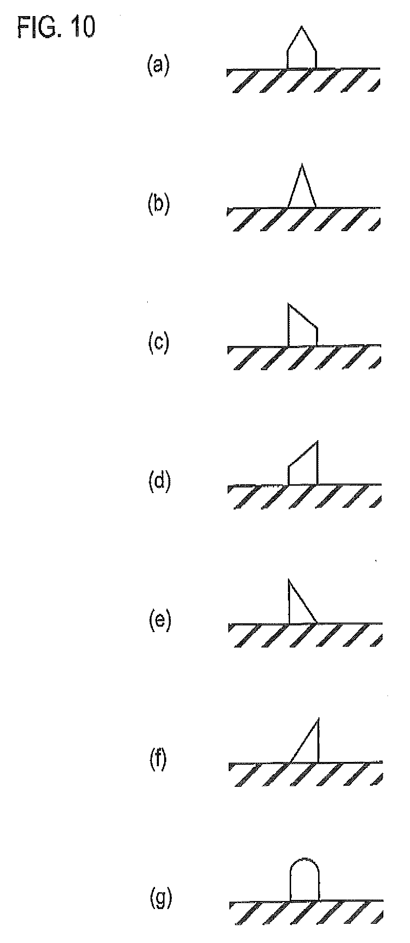

Further, Figs. 10 (a) to (g) show modifications of the cross-sectional shape of the protrusion portions 100. As shown in Figs. 10 (a) to (g), the cross-sectional shape of the protrusion portions 100 may not be flat in the upper end (as in Fig. 6).

Further, the angle *θ*, the groove depth D, and the groove width W may not satisfy the conditions defined In the present embodiment described above.

As mentioned above, it must be understood that the present invention includes various embodiments and the like that are not described herein.

### Industrial Applicability

The present invention can provide a tire that can effectively suppress a temperature increase of a tread portion due to vehicle running.

## Claims

1. A tire (10) in which a groove portion (30) extending in a tire circumferential direction is formed in a tread portion (20), wherein:
in a groove bottom (32) of the groove portion (30), a plurality of protrusion portions (100) are provided,
the protrusion portions (100) extend from one sidewall (31) forming the groove portion (30) toward the other sidewall (33) facing the one sidewall (31),
the protrusion portions (100) are provided at predetermined interval in the groove portion (30), and
when the length of the protrusion portions (100) along the groove center line (WL) is L and the predetermined interval is P, in a tread surface view of the tire (10), **characterised in that** the relation of 1.25L<P≦10L is satisfied.

2. The tire (10) according to claim 1 , wherein an angle θ, which is an angle formed between an arranged direction of the protrusion portions (100) and a groove center (WL) line passing through the center in the width direction of the groove portion (30), in the tread surface view of the tire (10), and is an angle formed on a side opposite to a rotation direction of the tire (10), is 10 to 60 degrees.

3. The tire (10) according to claim 1 or claim 2, wherein the relation of 0.03D<H≦0.4D is satisfied, when the height of the protrusion portions (100) from the groove bottom (32) is H, and the depth from a tread surface (20a) of the groove portion (30) to the groove bottom (32) is D.

4. The tire (10) according to any one of claim 1 to claim 3, wherein the groove bottom (32) is flat at least in the width of 0.2W, when the groove width of the groove portion (30) is W.

5. The tire (10) according to any one of claim 1 to claim 4, wherein the groove portion (30) is formed at a position including a tire equator line (CL).

6. The tire (10) according to any one of claim 1 to claim 5, the relation of DC/OD≧0.015 is satisfied, when a tire outer diameter is OD and a rubber gauge of a tread portion (20) at a position of a tire equator line (CL) is DC.

7. The tire (10) according to any one of claim 1 to claim 7, wherein the protrusion portions (100) are continuous from the one sidewall (31) to the other sidewall (33).

## Patentansprüche

1. Reifen (10), bei dem ein Rillenteil (30), der sich in einer Umfangsrichtung des Reifens erstreckt, in einem Profilteil (20) gebildet ist, wobei:
an einem Rillenboden (32) des Rillenteils (30) eine Vielzahl von Vorsprungsteilen (100) angeordnet ist,
sich die Vorsprungsteile (100) von einer Seitenwand (31), die den Rillenteil (30) bildet, zu der anderen Seitenwand (33) erstreckt, die der einen Seitenwand (31) gegenüberliegt,
die Vorsprungsteile (100) in einem bestimmten Intervall im Rillenteil (30) angeordnet sind; und
**dadurch gekennzeichnet, dass** in einer Ansicht der Profiloberfläche des Reifens (10) das Verhältnis 1,25L<P≦10L erfüllt ist, wenn die Länge der Vorsprungsteile (100) entlang der Rillenmittellinie (WL) L ist und das bestimmte Intervall P ist.

2. Reifen (10) nach Anspruch 1, wobei ein Winkel θ 10 bis 60 Grad beträgt, wobei der Winkel in der Ansicht der Profiloberfläche des Reifens (10) zwischen einer angeordneten Richtung der Vorsprungsteile (100) und einer Rillenmittellinie (WL) gebildet wird, die durch die Mitte des Rillenteils (30) in Breitenrichtung verläuft, und an einer Seite gebildet wird, die einer Rotationsrichtung des Reifens (10) entgegengesetzt angeordnet ist.

3. Reifen (10) nach Anspruch 1 oder 2, wobei das Verhältnis 0,03D<H≦0,4D erfüllt ist, wenn die Höhe der Vorsprungsteile (100) vom Rillenboden (32) H ist und die Tiefe von einer Profiloberfläche (20a) des Rillenteils (30) zum Rillenboden (32) D ist.

4. Reifen (10) nach einem der Ansprüche 1 bis 3, wobei der Rillenboden (32) mindestens in der Breite von 0,2W flach ist, wenn die Rillenbreite des Rillenteils (30) W ist.

5. Reifen (10) nach einem der Ansprüche 1 bis 4, wobei der Rillenteil (30) an einer Stelle gebildet ist, die eine Reifenäquatorlinie (CL) einschließt.

6. Reifen (10) nach einem der Ansprüche 1 bis 5, wobei das Verhältnis DC/OD≥0,015 erfüllt ist, wenn ein Außendurchmesser des Reifens OD ist und eine Gummidicke eines Profilteils (20) an einer Stelle einer Reifenäquatorlinie (CL) DC ist.

7. Reifen (10) nach einem der Ansprüche 1 bis 7, wobei die Vorsprungsteile (100) kontinuierlich von der einen Seitenwand (31) zu der anderen Seitenwand (33) angeordnet sind.

## Revendications

1. Bandage pneumatique, dans lequel une partie de rainure (30) s'étendant dans une direction circonférentielle du bandage pneumatique est formée dans une partie de bande de roulement (20), dans lequel :
un fond de rainure (32) de la partie de rainure (30), comporte plusieurs parties de saillie (100) ;
les parties de saillie (100) s'étendent d'un flanc (31), formant la partie de rainure (30) vers l'autre flanc (33), faisant face audit un flanc (31) ;
les parties de saillie (100) sont agencées à un intervalle prédéterminé dans la partie de rainure (30) ; et
**caractérisé en ce que**, lorsque la longueur des parties de saillie (100) le long de la ligne médiane de rainure (WL) correspond à L, le pas prédéterminé correspondant à P, dans une vue de la surface de bande de roulement du bandage pneumatique (10), la relation de 1,25L < P ≦ 10L est satisfaite.

2. Bandage pneumatique (10) selon la revendication 1, dans lequel un angle θ, constituant un angle formé entre une direction d'agencement des parties de saillie (100) et une ligne médiane de rainure (WL) passant à travers le centre dans la direction de la largeur de la partie de rainure (30), dans la vue de la surface de la bande de roulement du bandage pneumatique (10), et constituant un angle formé sur un côté opposé à la direction de rotation du bandage pneumatique (10), est compris entre 10 et 60 degrés.

3. Bandage pneumatique (10) selon les revendications 1 ou 2, dans lequel la relation de 0,03D < H ≤ 4D est satisfaite lorsque la hauteur des parties de saillie (100), à partir du fond de rainure (32), correspond à H, la profondeur, d'une surface de la bande de roulement (20a) de la partie de rainure (30) vers le fond de rainure (32), correspondant à D.

4. Bandage pneumatique (10) selon l'une quelconque des revendications 1 à 3, dans lequel le fond de rainure (32) est plat, au moins dans la largeur de 0,2W, lorsque la largeur de rainure de la partie de rainure (30) correspond à W.

5. Bandage pneumatique (10) selon l'une quelconque des revendications là 4, dans lequel la partie de rainure (30) est formée au niveau d'une position englobant une ligne équatoriale du bandage pneumatique (CL).

6. Bandage pneumatique (10) selon l'une quelconque des revendications 1 à 5, dans lequel la relation de DC/OD ≥ 0,015 est satisfaite lorsqu'un diamètre extérieur du bandage pneumatique correspond à OD et une épaisseur de la gomme d'une partie de bande de roulement (20), au niveau d'une position de la ligne équatoriale (CL) du bandage pneumatique, correspond à DC.

7. Bandage pneumatique (10) selon l'une quelconque des revendications 1 à 7, dans lequel les parties de saillie (100) sont continues dudit un flanc (31) vers l'autre flanc (33).
